# EUROPÄISCHE PATENTSCHRIFT

(11) **EP 3 681 102 B1**
(45) Veröffentlichungstag und Bekanntmachung des Hinweises auf die Patenterteilung: **16.03.2022**
(21) Anmeldenummer: 19151115.3
(22) Anmeldetag: 10.01.2019
(51) Int. Cl.: H04L 9/32, H04L 9/00

(54) **VERFAHREN ZUR VALIDIERUNG EINES DIGITALEN NUTZERZERTIFIKATS**
METHOD FOR VALIDATION OF A DIGITAL USER CERTIFICATE
PROCÉDÉ DE VALIDATION D'UN CERTIFICAT NUMÉRIQUE D'UTILISATEUR

(43) Veröffentlichungstag der Anmeldung: 15.07.2020
(73) Patentinhaber: Siemens Aktiengesellschaft, 80333 München (DE)
(72) Erfinder: Falk, Rainer, 85586 Poing (DE); Fries, Steffen, 85598 Baldham (DE)

(56) Entgegenhaltungen:
- EP-A1- 3 226 464
- US-A1- 2011 087 882
- Rainer Falk ET AL: "Using Managed Certificate Whitelisting as a Basis for Internet of Things Security in Industrial Automation Applications", International Journal on Advances in Security, vol. 8, no. 1 & 2, 30. Juni 2015 (2015-06-30), Seiten 89-98, XP055398447, Gefunden im Internet: URL:https://www.iariajournals.org/security /sec_v8_n12_2015_paged.pdf#page=97 [gefunden am 2017-08-14]

## Beschreibung

Verfahren zur Validierung eines digitalen Nutzerzertifikats eines Nutzers durch eine Überprüfungsvorrichtung, wobei das Nutzerzertifikat durch eine Signatur mit einem Ausstellerschlüssel einer das Nutzerzertifikat ausstellenden Ausstellungsstelle geschützt ist, sowie ein System, eine Überprüfungsvorrichtung, eine Nutzervorrichtung, ein Positivpfadserver und ein Computerprogrammprodukt, die derart ausgebildet sind, das Verfahren durchzuführen.

Mit Hilfe eines asymmetrischen Kryptosystems, beispielsweise einer Public Key Infrastructure (PKI), kann ein digitales Zertifikat zur Überprüfung der Echtheit bzw. der Identität eines Gerätes verwendet werden. Ein solches Zertifikat wird üblicherweise als Gerätezertifikat bezeichnet. Ein digitales Zertifikat kann des Weiteren zur Authentisierung eines Kommunikationspartners und/oder zur Verschlüsselung von ausgetauschten Nachrichten verwendet werden. So können Nachrichten in einem Netzwerk digital signiert und/oder verschlüsselt werden. Ein Sender der Nachricht benötigt für eine verschlüsselte Übermittlung den öffentlichen Schlüssel des Empfängers. Der Sender erhält diesen öffentlichen Schlüssel üblicherweise über ein digitales Zertifikat des Empfängers, das Angaben zur Identität des Empfängers, seinen zulässigen Anwendungs- und Geltungsbereich und den öffentlichen Schlüssel des Empfängers enthält. Das digitale Zertifikat selbst ist durch eine digitale Signatur geschützt, deren Echtheit mit dem öffentlichen Schlüssel des Ausstellers des Zertifikats geprüft werden kann.

Um die Authentizität das Ausstellerschlüssels zu prüfen, wird wiederum ein digitales Zertifikat benötigt. Auf diese Weise lässt sich eine Kette von digitalen Zertifikaten aufbauen, die jeweils die Integrität und Authentizität des öffentlichen Schlüssels bestätigt, mit dem das vorhergehende Zertifikat überprüft werden kann. Eine solche Kette von Zertifikaten wird im Weiteren als Zertifikatspfad bezeichnet. Auf die Echtheit des letzten, als Wurzelzertifikat bezeichneten Zertifikates müssen sich die Kommunikationspartner ohne ein weiteres Zertifikat verlassen können. Bei der Prüfung der Authentizität eines Zertifikates ist es daher notwendig, nicht nur das Zertifikat an sich zu prüfen, sondern auch den Pfad des Zertifikats bis zum Wurzelzertifikat, das beim Überprüfer schon vorliegen muss, zu verifizieren. Dies wird auch als Zertifikatspfad-Validierung bezeichnet.

Der Zertifikatpfad, also eine Kette von jeweils die Signatur des vorhergehenden Zertifikats bestätigenden Zertifikaten, kann auf verschiedene Arten beim Überprüfer gebildet werden. So sind Sicherheitsprotokolle, wie beispielsweise das Transportschicht-Sicherheitsprotokoll, bekannt, bei denen der komplette Zertifikatspfad als Teil des Nachrichtenaustauschs mitgeschickt wird. Dies ist insbesondere bei Geräten im Internet der Dinge, die beispielsweise batteriebetrieben sind und/oder über schmalbandige Verbindungen angeschlossen sind, nachteilig. Außerdem wird dieser Ansatz nur von speziellen Protokollen unterstützt. Alternativ kann der Überprüfer die Zertifikatskette bis zum Wurzelzertifikat auch selbst zusammenstellen. Dazu müssen eben die Zertifikate der möglichen Zertifikatsketten im Überprüfer vorliegen, oder über eine Anfrage bei einer Zertifikatsdatenbank ermittelt werden. Dies ist wiederum nicht immer der Fall bzw. für einfach strukturierte Geräte nachteilig. Weiterhin kann der Fall vorliegen, dass Geräte, die in einem separierten Teil-Netzwerk beispielsweise eines industriellen Automatisierungssystems betrieben werden, eine öffentliche Zertifikatsdatenbank nicht kontaktieren können.

Die Druckschrift US 2011 /087882 A1 beschreibt ein Verfahren zum automatischen Bereitstellen von Zertifikaten entsprechend einer Öffentlichen Schlüssel Infrastruktur (PKI) an neue Geräte innerhalb einer Organisation. Nachdem ein Gerät ein Gerätezertifikat erhalten und im Netzwerk akzeptiert wurde, wird das Gerätezertifikat in eine Positivliste aufgenommen. Anschließend kann ein Authentifikator der Organisation das Gerät direkt anhand der Positivliste authentifizieren. Eine Authentifizierung anhand einer Zertifikatkette ist nicht mehr notwendig.

Die Druckschrift Rainer Falk ET AL: "Using Managed Certificate Whitelisting as a Basis for Internet of Things Security in lndustrial Automation Applications", International Journal on Advances in Security, vol.8, no. 1 & 2, 30. Juni 2015 (2015-06-30), Seiten 89-98 beschreibt die Verwendung von Zertifikat-Positivlisten in industriellen Automationsanwendungen. Dabei wird ein Zertifikat erfolgreich validiert, wenn das Zertifikat in einer Zertifikats-Positivliste enthalten ist rechte Spalte. Eine Überprüfung der Signatur des Zertifikates wird beispielsweise anhand eines Satzes von vertrauenswürdigen Wurzelzertifikaten der Zertifizierungsstellen, durchgeführt.

Dokument EP 3 226 464 A1 beschreibt eine Datenstruktur zur Verwendung als Positivliste, die mindestens einen Eintrag, beispielsweise einen Wert eines vorbestimmten Zertifikatsfeldes, für jeden erlaubten Kommunikationspartner des Gerätes umfasst.

Bei einer Kompromittierung eines Zertifikats im Zertifikatpfad soll der Überprüfer weiterhin einfach feststellen können, ob ein empfangenes Zertifikat davon betroffen ist.

Die Realisierung einer Zertifikatsvalidierung ist somit komplex und fehleranfällig.

Es ist somit die Aufgabe der vorliegenden Erfindung, die Validierung eines digitalen Zertifikats bezüglich Fehleranfälligkeit und Komplexität zu verbessern.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Validierung eines digitalen Nutzerzertifikats eines Nutzers durch eine Überprüfungsvorrichtung, wobei das Nutzerzertifikat durch eine Signatur mit einem Ausstellerschlüssel einer das Nutzerzertifikat ausstellenden Ausstellungsstelle geschützt ist, und ein Zertifikatpfad eine Kette von jeweils die Signatur des vorhergehenden Zertifikats bestätigenden Zertifikaten ist, umfassend die Verfahrensschritte:
- Empfangen des Nutzerzertifikats in der Überprüfungsvorrichtung,
- Überprüfen des Nutzerzertifikats anhand einer Zertifikatspfad-Positivliste mit mindestens einem gültigen Zertifikatspfad, die von mindestens einem Positivpfadserver an die Überprüfungsvorrichtung bereitgestellt wird, und
- Bestätigen der Gültigkeit des Nutzerzertifikats, wenn der Ausstellerschlüssel des Nutzerzertifikats gemäß einem der gütigen Zertifikatspfade der Zertifikatspfad-Positivliste auf ein Wurzelzertifikat zurückführbar ist.

Die Ausdrücke "Nutzer" und "Nutzervorrichtung" werden in diesem Dokument als Synonyme verwendet. Nutzer oder Nutzervorrichtung bezeichnet diejenige Einheit, für die das digitale Nutzerzertifikat ausgestellt wurde bzw. die im Nutzerzertifikat als Eigentümer oder "subject" eingetragen ist. Als Überprüfungsvorrichtung wird die Vorrichtung bezeichnet, die das Nutzerzertifikat auf Gültigkeit überprüft. Bei der Verwendung eines Nutzerzertifikats beim Aufbau einer Kommunikationsverbindung wird ein erster Kommunikationspartner, umfassend ein Applikationsprotokoll, das bei der Authentisierung über ein Netzwerkprotokoll sein Nutzerzertifikat zur Authentisierung an den zweiten Kommunikationspartner übermittelt, als Nutzer bezeichnet. Der zweite Kommunikationspartner wird als Überprüfungsvorrichtung bezeichnet. Ein Nutzer kann aber auch ein Gerät selbst sein, das seine Authentizität beispielsweise bei einer Plagiatsprüfung einer Überprüfungseinheit übermittelt beziehungsweise bereitstellt. Ein Nutzer kann aber auch beispielsweise der Nutzer einer Chipkarte sein, die zur Authentisierung oder Zugriffskontrolle ein digitales Zertifikat und den korrespondierenden privaten Schlüssel umfasst. In einem solchen Fall ist die Überprüfungsvorrichtung entsprechend ein Zugriffskontrollserver oder Authentisierungsserver.

Die Überprüfungsvorrichtung kann somit in einfacher Weise die Gültigkeit der Signatur des Nutzerzertifikats ermitteln. Das Nutzerzertifikat wird dann als gültig erachtet, wenn sich der Ausstellerschlüssel durch die Kette der Zertifikate eines Zertifikatpfades aus der Zertifikatspfad-Positivliste auf ein Wurzelzertifikat zurückführen lässt. Die Validierung von Zertifikatspfaden ist somit wenig fehleranfällig, editierbar und ermöglicht eine gezielte Kontrolle über zulässige Zertifikatspfade. Dadurch ist sie insbesondere für Sicherheitskritische industrielle Automatisierungssysteme vorteilhaft. Weiterhin kann man das Verfahren auf Geräten mit geringer Rechenleistung effizient durchführen.

In einer vorteilhaften Ausführungsform wird die Zertifikatspfad-Positivliste mittels einer kryptografischen Funktion gegen nichtautorisierte Änderungen geschützt.

Dies erschwert eine Manipulation der Zertifikatspfad-Positivliste bzw. ermöglicht es eine Manipulation zuverlässig zu erkennen. Die Zertifikatspfad-Positivliste ist beispielsweise digital signiert auf dem Positivpfadserver abgespeichert und/oder wird über eine kryptografisch gesicherte Kommunikationsverbindung, die beispielsweise über ein Transportschichtsicherheits-Protokoll (TLS), von dem Positivpfadserver an die Überprüfungsvorrichtung übermittelt. Die Übertragung kann auch als eine Transaktion über einen Block einer Blocckette eines verteilten Datenbanksystems bestätigt werden.

In einer vorteilhaften Ausführungsform wird die Zertifikatspfad-Positivliste abhängig von vorgegebenen Kriterien aktualisiert und von dem mindestens einen Positivpfadserver an die Überprüfungsvorrichtung bereitgestellt.

Somit können beispielsweise Zertifikatspfade, die zu einem bestimmten Zeitpunkt beziehungsweise aktuell zulässig sind, in die Zertifikatspfad-Positivliste aufgenommen und an die Überprüfungsvorrichtung weitergegeben werden. So kann beispielsweise die Zertifikatspfad-Positivliste zu verschiedenen vorgegebenen Kriterien wie beispielsweise zu festgelegten Zeitpunkten beziehungsweise periodisch, wie wöchentlich, täglich, monatlich oder jährlich aktualisiert und bereitgestellt werden. Weitere Kriterien sind beispielsweise nach der Ausstellung einer vorgegebenen Anzahl von Zertifikaten, beispielsweise nach 100.000 ausgestellten Zertifikaten, bei Widerruf eines Zertifikats oder einer vorgegebenen Anzahl von Zertifikaten, bei Widerruf, Änderung oder Erneuerung des Zertifikats der ausstellenden Ausstellungsstelle oder eines Zertifikats mindestens einer der ausstellenden Ausstellungsstelle übergeordneten Ausstellungsstellen auf dem Pfad zum Wurzelzertifikat.

Optional ist es auch möglich, eine Negativliste von nicht zugelassenen, gesperrten Zertifikatspfaden zu veröffentlichen, das heißt der Überprüfungsvorrichtung bereitzustellen. Dadurch können komplette Zertifikatsgruppen ausgemustert werden, wenn bestimmte Zertifikatspfade als nicht mehr gültig angesehen werden. Zum Beispiel können bestimmte Zertifikatspfade, die für einen Test oder eine Inbetriebnahme von Nutzern benötigt werden, nach Abschluss der Inbetriebnahme für ungültig erklärt und somit zurückgezogen werden.

In einer vorteilhaften Ausführungsform empfängt mindestens ein Positivpfadserver die Zertifikats-Positiv-Listen mit gültigen Zertifikatspfaden für die von der Ausstellungsstelle ausgestellten Zertifikate.

Somit kann die Ausstellungsstelle selbst gültige Zertifikatspfade an den Positivpfadserver übermitteln. Der Positivpfadserver veröffentlicht die gültigen Zertifikatspfade in Form einer beispielsweise aktualisierten Zertifikatspfad-Positivliste. Neben der das Nutzerzertifikat ausstellenden Ausstellungsstelle können auch der ausstellenden Ausstellungsstelle übergeordnete Ausstellungsstellen gültige Zertifikatspfade zum Wurzelzertifikat an den Positivpfadserver übermitteln und über den Positivpfadserver veröffentlichen. Der Positivpfadserver kann dabei die bisherigen Zertifikatspfade oder Teile von Zertifikatspfaden in Zertifikatspfad-Positivlisten durch die übermittelten Zertifikatspfade ersetzen.

In einer vorteilhaften Ausführungsform fordert der mindestens eine Positivpfadserver die für Nutzerzertifikate des Nutzers gültigen Zertifikatspfade an und erzeugt die Zertifikatspfad-Positivliste umfassend die gültigen Zertifikatspfade.

Dies hat den Vorteil, dass der Positivpfadserver eine Zertifikatspfad-Positivliste gezielt für bestimmte Nutzerzertifikate "lernen" kann. So werden beispielsweise bei der Inbetriebnahme oder Wartung eines Nutzers oder häufig einer Vielzahl von Nutzern die gültigen Zertifikatspfade genau dieser Nutzer vom Positivpfadserver ermittelt und beispielsweise einem für die Wartung verwendeten Gerät zur Verfügung gestellt. Der Positivpfadserver kann die gültigen Zertifikatspfade beispielsweise von der Ausstellungsstelle der Nutzerzertifikate oder von einem übergeordneten Konfigurationsserver anfordern.

In einer vorteilhaften Ausführungsform umfasst ein gültiger Zertifikatspfad alle Zertifikate beginnend mit einem Zertifikat der ausstellenden Ausstellungsstelle oder alle Zertifikate beginnend mit einem der ausstellenden Ausstellungsstelle übergeordneten Ausstellungsstelle bis einschließlich einem Wurzelzertifikat.

Dies hat den Vorteil, dass im erstgenannten Fall für jedes Nutzerzertifikat mindestens ein kompletter und als gültig erachteter Zertifikatspfad bereitgestellt wird. In der letztgenannten Option, in dem im Zertifikatspfad alle Zertifikate beginnend erst mit dem der ausstellenden Ausstellungsstelle übergeordneten Ausstellungsstelle Zertifikatspfade enthalten sind, ist der Zertifikatspfad unabhängig von einem konkreten Nutzerzertifikat. Somit kann die Gültigkeit eines Nutzerzertifikats abhängig von einem konkreten Zertifikatspfad als Richtlinie oder auch Policy vorgegeben werden.

In einer vorteilhaften Ausführungsform umfasst die Zertifikatspfad-Positivliste Randbedingungen für die Verwendung des mindestens einen gültigen Zertifikatspfades.

Somit können weitere Verwendungsoptionen in Form von Randbedingungen bei der Überprüfung der Gültigkeit des Zertifikatspfades überprüft und somit als Richtlinie zur Verwendung der Zertifikatspfade implementiert werden.

In einer vorteilhaften Ausführungsform wird die Zertifikatspfad-Positivliste durch einen Übermittlungsdienst oder eine Transaktion einer Blockkette einer verteilten Datenbank an die Überprüfungsvorrichtung bereitgestellt. Eine Blockkette kann auch als Blockchain oder als Distributed Ledger bezeichnet werden.

Dadurch wird sichergestellt, dass lediglich gültige und nicht-manipulierte Zertifikatspfad-Positivlisten in den Überprüfungsvorrichtungen vorliegen. Ein Übermittlungsdienst ist dabei ein Dienst bzw. ein Applikationsprogramm, der bzw. das beispielsweise durch einen Server eines Dienst-Providers bereitgestellt wird und beispielsweise über das öffentliche Internet dem Nutzer und/oder der Überprüfungsvorrichtung zugänglich ist.

In einer vorteilhaften Ausführungsform wird die Zertifikatspfad-Positivliste beim Ausstellen des Nutzerzertifikats von der Ausstellungsstelle in das Nutzerzertifikat eingefügt.

Dies hat den Vorteil, dass das Nutzerzertifikat selbst Information zu dem gültigen Zertifikatspfaden umfasst und somit in der Überprüfungsvorrichtung keine separate Zertifikatspfad-Positivliste gespeichert sein muss.

In einer vorteilhaften Ausführungsform wird die Zertifikatspfad-Positivliste als Zertifikatserweiterung in das Nutzerzertifikat eingebracht.

Dies hat dem Vorteil, dass zusammen mit einem Nutzerzertifikat die zugeordnete Zertifikatspfad-Positivliste bereitgestellt wird. Dadurch kann bei Protokollen, die lediglich ein Nutzerzertifikat übermitteln, ohne Protokolländerung eine Zertifikatspfad-Positivliste von einem Teilnehmer an einen anderen Teilnehmer übermittelt werden.

In einer vorteilhaften Ausführungsform ist ein Zertifikatspfad in komprimierter Form in der Zertifikatspfad-Positivliste eingebracht.

Dies hat den Vorteil, dass die Zertifikatspfad-Positivliste Speicherplatz-optimiert ausgebildet werden kann. So kann beispielsweise mindestens ein Zertifikat eines Zertifikatspfades durch dessen Hashwert repräsentiert werden. Ein Zertifikatspfad umfasst somit lediglich eine Folge von Hashwerten aller oder eines Teils der Zertifikate im Zertifikatspfad. Ein oder mehrere Zertifikate eines Zertifikatspfades können aber auch durch eine Seriennummer und den Aussteller des jeweiligen Zertifikats repräsentiert werden.

In einer vorteilhaften Ausführungsform wird eine Referenzinformation zur Zertifikatspfad-Positivliste in das Nutzerzertifikat eingebracht. Die Referenzinformation kann insbesondere ein Hash-Wert der Zertifikatspfad-Positivliste, ein Uniform Resource Identifier (URI) oder ein Unified Resource Locator (URL) sein.

Dies hat den Vorteil, dass die Zertifikatspfad-Positivliste speicherplatzoptimiert ist und beispielsweise die Referenzinformation über die ausstellende Ausstellungsstelle aufgelöst werden kann. In der ausstellenden Ausstellungsstelle kann somit sehr flexibel der Zertifikatspfad aktualisiert werden, ohne diese aktualisierte Information jedem Nutzer beziehungsweise jeder Überprüfungsvorrichtung mitzuteilen. Die jeweils aktuelle Zertifikatspfad-Positivliste wird lediglich bei Bedarf beim Positivpfadserver abgefragt.

Ein zweiter Aspekt der vorliegenden Erfindung betrifft ein System zur Validierung eines digitalen Nutzerzertifikats eines Nutzers durch eine Überprüfungsvorrichtung, wobei das Nutzerzertifikat durch eine digitale Signatur mit einem Ausstellerschlüssel einer das Nutzerzertifikat ausstellenden Ausstellungsstelle geschützt ist, und ein Zertifikatpfad eine Kette von jeweils die Signatur des vorhergehenden Zertifikats bestätigenden Zertifikaten ist, umfassend jeweils einen Nutzer, eine Überprüfungsvorrichtung, einen Positivpfadserver und eine Ausstellungsstelle, die derart ausgebildet sind, das beschriebene Verfahren auszuführen.

Ein solches System kann vorzugsweise eine Automatisierungsanlage mit beispielsweise Feldgeräten als Nutzervorrichtung und Überprüfungsvorrichtung sein. Darin wirken die Feldgeräte, ein Positivpfadserver und eine Ausstellungsstelle gemäß dem beschriebenen Verfahren zusammen.

Ein dritter Aspekt der Erfindung betrifft eine Nutzervorrichtung mit einem digitalen Nutzerzertifikat, wobei das Nutzerzertifikat durch eine digitale Signatur mit einem Ausstellerschlüssel einer das Nutzerzertifikat ausstellenden Ausstellungsstelle geschützt ist, und ein Zertifikatpfad eine Kette von jeweils die Signatur des vorhergehenden Zertifikats bestätigenden Zertifikaten ist, die derart ausgebildet ist, das zuvor beschriebene Verfahren auszuführen.

Ein vierter Aspekt der Erfindung betrifft einen Positivpfadserver zur Bereitstellung von Zertifikatspfadinformationen zur Validierung eines digitalen Nutzerzertifikats eines Nutzers, wobei das Nutzerzertifikat durch eine digitale Signatur mit einem Ausstellerschlüssel einer das Nutzerzertifikat ausstellenden Ausstellungsstelle geschützt ist, und ein Zertifikatpfad eine Kette von jeweils die Signatur des vorhergehenden Zertifikats bestätigenden Zertifikaten ist, die derart ausgebildet ist, das zuvor beschriebene Verfahren auszuführen.

Der Positivpfadserver kann software- oder hardwaretechnisch ausgebildet sein. Der Positivpfadserver kann insbesondere integriert in einer Ausstellungsstelle implementiert sein oder auch als separat von der Ausstellungsstelle ausgebildeter Server, beispielsweise zentral als ein Backend-Server ausgebildet sein.

Ein fünfter Aspekt der Erfindung betrifft ein Computerprogrammprodukt, das direkt in einen Speicher eines digitalen Computers ladbar ist, umfassend Programmcodeteile, die dazu geeignet sind, die Schritte des zuvor beschriebenen Verfahrens durchzuführen.

Sofern es in der nachfolgenden Beschreibung nicht anders angegeben ist, beziehen sich die Begriffe "Empfangen", "Überprüfen", "Bestätigen", "Bereitstellen" vorzugsweise auf Handlungen und/oder Prozesse und/oder Verarbeitungsschritte, die Daten verändern und/oder Erzeugen und/oder die Daten in andere Daten überführen, wobei die Daten insbesondere als physikalische Größen dargestellt werden oder vorliegen können, beispielsweise als elektrische Impulse. Der Nutzer bzw. die Nutzervorrichtung, die Überprüfungsvorrichtung, der Positivpfadserver sowie die Ausstellungsstelle umfassen vorzugsweise mindestens einen Prozessor. Unter einem Prozessor kann im Zusammenhang mit der Erfindung beispielsweise eine Vorrichtung oder eine elektronische Schaltung verstanden werden. Bei einem Prozessor kann es sich insbesondere um einen Hauptprozessor, einen Mikroprozessor oder einen Mikrocontroller, möglicherweise in Kombination mit einer Speichereinheit zum Speichern von Programmbefehlen etc. handeln. Ein Nutzer, eine Überprüfungseinheit, ein Positivpfadserver und eine Ausstellungsstelle kann jeweils hardwaretechnisch und/oder softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner ausgebildet sein. Bei einer softwaretechnischen Implementierung kann die Einheit als Computerprogrammprodukt, als eine Funktion, als eine Routine, als Teil eines Programmcodes oder als ausführbares Objekt ausgebildet sein.

Ein Computerprogrammprodukt, wie zum Beispiel ein Computerprogramm-Mittel, kann beispielsweise als Speichermedium, wie zum Beispiel als Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens sowie des erfindungsgemäßen Systems, der Nutzervorrichtung, der Überprüfungsvorrichtung und des Positivpfadservers sind in den Zeichnungen beispielhaft dargestellt und werden anhand der nachfolgenden Beschreibung näher erläutert. Es zeigen:
- Figur 1: ein Beispiel eines digitalen Zertifikats in schematischer Darstellung;
- Figur 2: ein Beispiel eines Zertifikatpfades in schematischer Darstellung;
- Figur 3: ein Ausführungsbeispiel eines erfindungsgemäßen Systems in einem Anwendungsszenarium in schematischer Darstellung;
- Figur 4: ein Ausführungsbeispiel des erfindungsgemäßen Verfahrens in Form eines Ablaufdiagramms;
- Figur 5: ein zweites Ausführungsbeispiel eines erfindungsgemäßen Systems in schematischer Darstellung;
- Figur 6: ein drittes Ausführungsbeispiel eines erfindungsgemäßen Systems in schematischer Darstellung; und
- Figur 7: ein Ausführungsbeispiel zum Ablauf einer Überprüfung eines in komprimierter Form vorliegenden Nutzerzertifikats in einer Überprüfungsvorrichtung als Ablaufdiagramm.

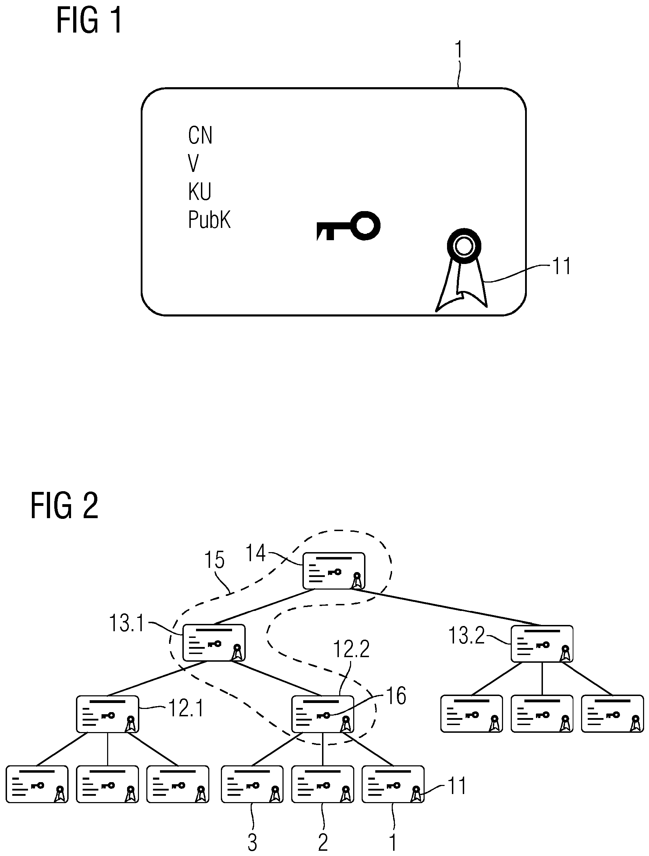

Figur 1 zeigt den prinzipiellen Aufbau eines digitalen Zertifikats 1, beispielsweise entsprechend dem ITU-T Standard X.509. Ein solches digitales Zertifikat 1 wird in einem asymmetrischen Kryptosystem beispielsweise zur Authentifizierung eines Nutzers durch eine Überprüfungsvorrichtung benötigt. Das digitale Zertifikat 1 umfasst unter anderem einen öffentlichen Schlüssels PubK des Nutzers des Zertifikats 1, der auch mittels eines Schlüsselsymbols zusätzlich dargestellt. Das digitale Zertifikat 1 ist selbst durch eine digitale Signatur 11 geschützt, deren Echtheit mit dem öffentlichen Schlüssel der Ausstellungsstelle des Zertifikats 1 geprüft werden kann. Der öffentliche Schlüssel einer Ausstellungsstelle wird im Weiteren als Ausstellerschlüssel bezeichnet.

Das Zertifikat 1 umfasst des Weiteren einen allgemeinen Namen CN des Nutzers, durch den ein Nutzer, für den das Zertifikat ausgestellt wurde, identifiziert wird. Dies kann beispielsweise durch seinen Namen, seine e-Mail-Adresse, seine IP-Adresse, etc. angegeben werden. Bei Gerätezertifikaten kann der Hersteller, der Gerätetyp und/oder die Seriennummer des Gerätes als allgemeiner Name eingetragen sein. Auch können ein projektierter Gerätename oder ein Pseudonym als allgemeiner Name eingetragen sein. Des Weiteren umfasst das Zertifikat 1 Angaben zur Gültigkeitsdauer V und zum zulässigen Anwendungs- und Geltungsbereich.

Um die Authentizität des Ausstellerschlüssels, mit dem die digitale Signatur 11 generiert wurde, zu überprüfen, wird wiederum ein digitales Zertifikat benötigt. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten wird als Zertifikatspfad bezeichnet. Auf die Echtheit des letzten Zertifikates, das als Wurzelzertifikat bezeichnet wird, müssen sich die Kommunikationspartner ohne ein weiteres Zertifikat verlassen. Es gibt des Weiteren auch selbst-signierte Zertifikate. Ein solches selbst-signiertes Zertifikat wird vom Inhaber selbst signiert, das heißt die Signatur des Zertifikats wird mittels des im Zertifikat enthaltenen öffentlichen Schlüssels PubK überprüft werden. Ein Wurzelzertifikat einer Ausstellungsstelle ist ebenfalls in der Regel ein selbst-signiertes Zertifikat.

Figur 2 zeigt ein Beispiel für eine Zertifikat-Hierarchie mit einem Wurzelzertifikat 14, mehreren Zertifikaten 13.1, 13.2. von Unterausstellungsstellen. Weiterhin sind Zertifikate von weiteren Unterausstellungsstellen 12.1 und 12.2 der Unterausstellungsstelle mit dem Zertifikat 13.1 dargestellt.

Der Zertifikatspfad 15 kann durch eine Liste der Zertifikate 12.2, 13.1 und 14 codiert werden. Erfindungsgemäß ist es möglich, den Zertifikatspfad 15 durch eine Angabe eines Hashwertes eines Zertifikats oder eine Angabe der Seriennummer und des Ausstellers des jeweiligen Zertifikats anstatt dem Zertifikat selbst zu bilden. Einem Zertifikatspfad 15 kann eine Zusatzinformation zugeordnet werden. So können Kriterien für die Verwendung der Nutzerzertifikate 1, 2, 3 definiert werden, beispielsweise ob ein Gerät mit einem Gerätezertifikat, das mit dieser Zertifikatskette 15 überprüfbar ist, für Safety-kritische Steuerungsaufgaben verwendet werden darf.

Es wird nun erfindungsgemäß eine Information veröffentlicht, welche Zertifikatspfade zu einem bestimmten Zeitpunkt beziehungsweise aktuell zulässig sind. Somit werden zulässige Zertifikatspfade einer Überprüfungsvorrichtung, die das Zertifikat eines Nutzers überprüfen möchte, bereitgestellt.

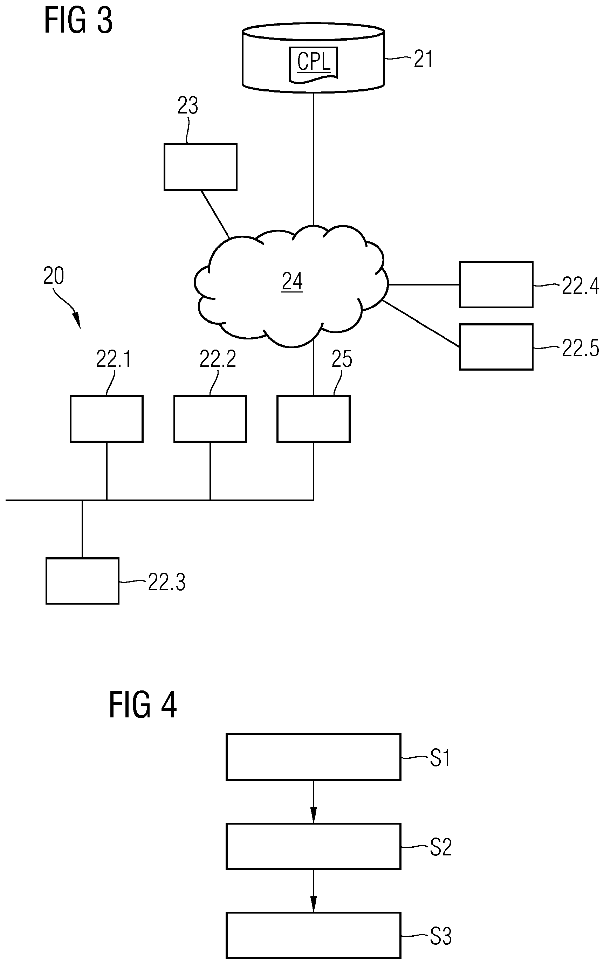

Figur 3 zeigt ein Ausführungsbeispiel eines erfindungsgemäßen Systems am Beispiel eines Automatisierungsnetzwerks 20. Die Komponenten des Systems können aber auch Knoten in einem anderweitig verwendeten Kommunikationsnetzwerk sein, das eine Public-Key-Infrastruktur als asymmetrisches Kryptosystem nutzt. Das Automatisierungsnetzwerks 20 umfasst mehrere Nutzer, beispielsweise Feldgerät 22.1, 22.2, 22.3, 22.4, 22.5. Die Feldgeräte 22.1 bis 22.3 sind über einen Gateway 25 an ein öffentliches Übertragungsnetz 24, beispielsweise ein Internetprotokollnetz, mit den weiteren Feldgeräten 22.4 und 22.5 sowie eine Ausstellungsstelle 23 sowie ein Positivpfadserver 21 verbunden. Die Ausstellungsstelle 23 hat in diesem Beispiel Nutzerzertifikate für die Feldgeräte beziehungsweise Nutzervorrichtungen 22.1 bis 22.5 ausgestellt und mit ihrem privaten Schlüssel, beispielsweise dem Ausstellerschlüssel 16 aus Figur 2 signiert.

Der Positivpfadserver 21 umfasst mindestens eine Zertifikatspfad-Positivliste CPL mit gültigen Zertifikatspfaden 15 für die von der Ausstellungsstelle 23 ausgestellten Zertifikate. Möchte beispielsweise das Feldgerät 22.1 mit dem Feldgerät 22.2 kommunizieren, so wird zur Authentisierung des Feldgeräts 22.1, das hier die Rolle des Nutzers einnimmt, durch das Feldgerät 22.2, das die Rolle der Überprüfungsvorrichtung einnimmt, überprüft, um die Authentizität des Feldgeräts 22.1 zu validieren. Das Nutzerzertifikat des Nutzers 22.1 ist dabei durch eine Signatur mit dem Ausstellerschüssel der Ausstellungsstelle 23 geschützt.

Anhand des Ablaufdiagramms in Figur 4 wird nun das erfindungsgemäße Verfahren näher beschrieben.

In einem ersten Verfahrensschritt S1 empfängt die Überprüfungsvorrichtung 22.2 das Nutzerzertifikat des Nutzers/Feldgeräts 22.1. Im Verfahrensschritt S2 überprüft die Überprüfungsvorrichtung 22.2 das Nutzerzertifikat anhand einer Zertifikatspfad-Positivliste CPL, die mindestens einen gültigen Zertifikatspfad umfasst und von mindestens einem Positivpfadserver 21 an die Überprüfungsvorrichtung 22.2 bereitgestellt wurde. Im Verfahrensschritt S3 wird die Gültigkeit des Nutzerzertifikats nur dann bestätigt, wenn die digitale Signatur bzw. der Ausstellerschlüssel des Nutzerzertifikats des Nutzers 22.1 gemäß einem der gültigen Zertifikatspfade der Zertifikatspfad-Positivliste auf ein Wurzelzertifikat zurückführbar sind.

Die Zertifikatspfad-Positivliste CPL wird mittels einer kryptographischen Funktion geschützt. Auf dem Zertifikatspfadserver 21 wird die Zertifikatspfad-Positivliste ebenfalls kryprographisch geschützt abgespeichert. Vorteilhafterweise ist eine Zertifikatspfad-Positivliste digital signiert und dadurch vor Manipulation geschützt. Des Weiteren kann zur Zertifikatspfad-Positivliste ein kryprographische Nachrichten-Authentisierungscode erstellt und zur Überprüfung bereitgestellt werden. Die Zertifikatspfad-Positivliste CPL kann über eine kryptographisch geschützte Kommunikationsverbindung, beispielsweise mittels einer über das Transportschicht-Sicherheitsprotokoll TLS aufgebaute Kommunikationsverbindung an die Überprüfungsvorrichtung 22.2 übermittelt werden.

Des Weiteren kann die Zertifikatspfad-Positivliste CPL abhängig von vorgegebenen Kriterien aktualisiert werden und von dem mindestens einen Positivpfadserver 21 an die Überprüfungsvorrichtung 22.2 bereitgestellt werden.

Die Ausstellung einer Zertifikatspfad-Positivliste CPL kann zu verschiedenen Zeitpunkten erfolgen. Sie kann zu festgelegten Zeitpunkten, beispielsweise täglich, wöchentlich, monatlich oder jährlich der Überprüfungsvorrichtung 22.1 bereitgestellt werden. Sie kann aber auch nach der Ausstellung einer vorgegebenen Anzahl an Nutzerzertifikaten, beispielsweise nach 100.000 ausgestellten Zertifikaten, von der Ausstellungsstelle 23 beziehungsweise von dem Positivpfadserver 21 bereitgestellt werden. Die Zertifikatspfad-Positivliste CPL kann bei Widerruf, Änderung oder Erneuerung des Zertifikats 12.2 einer Unterausstellungsstelle beziehungsweise bei Widerruf, Änderung oder Erneuerung eines der Zertifikate 13.1 einer weitere Unterausstellungsstelle auf dem Weg zum Wurzelzertifikat 14, siehe Figur 2, erneut bereitgestellt werden.

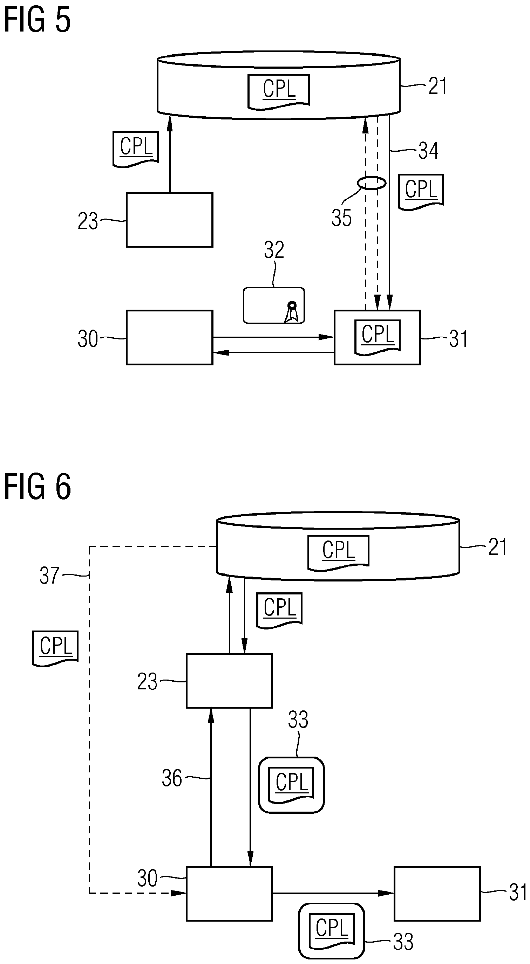

Figur 5 zeigt detailliert eine Variante, wie eine Zertifikatspfad-Positivliste CPL von dem Positivpfadserver 21 beziehungsweise der Ausstellungsstelle 23 an die Überprüfungsvorrichtung 31 bereitgestellt wird. Die Ausstellungsstelle 23 und der Positivpfadserver 21 können als eine integrierte Einheit ausgebildet sein oder als zwei separate physikalisch getrennte Einheiten, wie in Figur 5 dargestellt, ausgebildet sein.

Die Zertifikatspfad-Positivliste CPL wird erstmals bevorzugt bei der Inbetriebnahme der Überprüfungsvorrichtung 31 und nachfolgend abhängig von weiteren Kriterien vom Positivpfadserver 21 bereitgestellt. Beispielsweise wird die Zertifikatspfad-Positivliste CPL von der Ausstellungsstelle 23 an den Positivpfadserver 21 bereitgestellt. Die Ausstellungsstelle 23 kann dies selbst veranlassen und, beispielsweise nach einer vorgegebenen Zeit, die Zertifikatspfad-Liste CPL an den Positivpfadserver 21 übermitteln. Der Positivpfadserver 21 kann aber auch die Zertifikatspfad-Positivliste aktiv bei der Ausstellungsstelle 23 anfordern.

Die Zertifikatspfad-Positivliste CPL kann bevorzugt in einer geschützten Kommunikationsverbindung, siehe 35, geschützt vom Positivpfadserver 21 an die Überprüfungsvorrichtung 31 übermittelt werden. Dies kann innerhalb eines Webdienstes, also eines öffentlich zugänglichen Dienstes, ausgeführt werden. Die Zertifikatspfad-Positivliste CPL kann aber auch als Transaktion einer Blockchain-Infrastruktur veröffentlicht werden. Dies gilt sowohl für die Übertragung der Zertifikatspfad-Positivliste CPL zwischen der Ausstellungsstelle 23 und dem Positivpfadserver 21 sowie der Übertragung zwischen dem Positivpfadserver 21 und der Überprüfungseinheit 31.

Die Zertifikatspfad-Positivliste CPL kann auch vom Positivpfadserver 21 selbst zusammengestellt werden. Dabei wird die Zertifikatspfad-Positivliste CPL insbesondere abhängig von einem bestimmten Ereignis oder von einem bestimmten Zeitpunkt vom Positivpfadserver 21 angelernt. Der Zeitpunkt beziehungsweise ein Ereignis kann dabei beispielsweise die Inbetriebnahme eines Automatisierungssystems oder bei deren Wartung vorliegen. Die auftretenden, benötigten und insbesondere als zulässig erachteten Zertifikatspfade werden vom Positivpfadserver 21, beispielsweise über einen Konfigurationsserver, ermittelt und eine entsprechende Zertifikatspfad-Positivliste wird daraus vom Positivpfadserver 21 erstellt. Der mindestens eine Positivpfadserver 21 fordert somit die für die Nutzerzertifikate eines Nutzers 30 gültigen Zertifikatpfade an.

Es können bestimmte Zertifikatspfade als speziell vertrauenswürdige Zertifikatspfade gekennzeichnet sein. Wird ein solcher vertrauenswürdige Zertifikatspfad verwendet, wird dies auf einer Nutzeroberfläche beispielsweise durch eine vorbestimmte andere Farbe oder andere Schriftart dargestellt. In einer anderen Variante können kritische Funktionen, insbesondere eine Cloud-basierte Steuerungs- oder Überwachungsfunktion eines technischen Systems, wie autonome Fahrzeuge, Roboter oder Steuerungssysteme einer Prozessautomatisierung, einer Fertigungsautomatisierung, einer Bahnautomatisierung oder einer Energienetzautomatisierung, nur Zertifikatspfade akzeptieren, die in einer für diesen Anwendungsfall vorgesehene Zertifikatspfad-Positivliste CPL enthalten sind. Übermittelt der Nutzer 30 sein Nutzerzertifikat 32 an die Überprüfungsvorrichtung 31, so kann dieses anhand der gültigen Zertifizierungspfade in der in der Überprüfungsvorrichtung 31 beispielsweise abgespeicherten Zertifikatspfadpositivliste CPL überprüfen. Der Nutzer 30 kann somit ein einfach aufgebautes, wenig komplexes Gerät bzw. Vorrichtung sein.

Alternativ kann beim Ausstellen eines Nutzerzertifikats 33 Information zum Zertifikatspfad, insbesondere die Zertifikatspfadliste CPL, in das Zertifikat eincodiert werden und mit dem Nutzerzertifikat 33 an die Überprüfungsvorrichtung 31 übermittelt werden. Dies wird nachfolgend anhand von Figur 6 genauer erläutert.

Ein Gerät kann mehrere Funktionen bzw. Funktionsklassen realisieren, z.B. Steuerung und Wartung/Diagnose. Es können für unterschiedliche Funktionen bzw. Funktionsklassen unterschiedliche Zertifikatspfad-Positivlisten CPL verwendet werden. In einer weiteren Variante prüft ein Gerät ein Nutzerzertifikat entsprechend der Zertifikatspfad-Positivliste, wenn auf dem Gerät eine Zertifikatspfad-Positivliste konfiguriert ist und/oder wenn das Nutzerzertifikat eine Zertifikatspfad-Positivliste umfasst. Andernfalls kann eine herkömmliche Zertifikatspfad-Validierung für das Nutzerzertifikat erfolgen, oder das Nutzerzertifikat kann als ungültig abgewiesen werden. Weiterhin ist es möglich, dass eine herkömmliche Zertifikatspfadvalidierung erfolgt, und zusätzlich geprüft wird, ob der Zertifikatspfad gemäß einer Zertifikatspfad-Positivliste zulässig ist. Beispielsweise kann eine Implementierung eines Sicherheitsprotokolls wie TLS (z.B. O-penSSL) eine herkömmliche Zertifikatspfadvalidierung durchführen, und die Applikation, die die Implementierung des Sicherheitsprotokolls nutzt, zusätzlich eine Prüfung gegen eine Zertifikatspfad-Positivliste durchführen.

Figur 6 zeigt ein erfindungsgemäßes System mit der Überprüfungsvorrichtung 31 und dem Positivpfadserver 21 sowie dem Nutzer 30. Der Nutzer 30 fordert beispielsweise über eine Zertifikatsanforderungsnachricht 36 ein Nutzerzertifikat für sich bei der Ausstellungsstelle 23 an. Abhängig von Nutzerangaben in der Zertifikatsanforderungsnachricht 36 fordert die Ausstellungsstelle 23 beim Positivpfadserver 21 eine Zertifikatspfad-Positivliste CPL für diesen Nutzer 30 an. Die vom Positivpfadserver 21 übermittelte Zertifikatspfad-Positivliste CPL wird von der Ausstellungsstelle 23 empfangen und in das angeforderte Zertifikat eingebunden, beispielsweise als Zertifikats-Attribut oder als Zertifikatserweiterung (Certificate Extension) eincodiert. Das Zertifikat 33 mit integrierter Zertifikatspfad-Positivliste CPL wird als Antwort auf die Zertifikatanforderungsnachricht 36 an den Nutzer 30 übermittelt. Der Nutzer 30 verwendet das digitale Zertifikat 33, um sich gegenüber einer Überprüfungseinheit 31 zu authentisieren.

Das digitale Zertifikat 33 mit der darin enthaltenen Zertifikatspfad-Positivliste CPL ist solange gültig, bis entweder die Gültigkeitsdauer des Zertifikats 33 abgelaufen ist. Wenn während der Gültigkeitsdauer des ausgestellten Zertifikats eine andere geänderte Zertifikatspfad-Positivliste CPL vorliegt, so kann das ausgestellte digitale Zertifikat 33 widerrufen werden und ein entsprechendes digitales Zertifikat mit aktualisierter Zertifikatspfad-Positivliste ausgestellt werden. Das Nutzerzertifikat 33 wird beispielsweise nach einer vorgegebenen Zeitspanne oder abhängig von vorgegebenen Ereignissen, wie bereits beschrieben, aktualisiert. Der Nutzer wird dann beispielsweise durch eine Mitteilung über das Vorliegen einer aktualisierten Zertifikatspfad-Positivliste informiert. Der Nutzer 30 kann daraufhin beispielsweise ein aktualisiertes Nutzerzertifikat bei der Ausstellungsstelle 23 anfordern.

In einer Variante wird die Zertifikatspfad-Positivliste CPL nicht über die Ausstellungsstelle 23 beziehungsweise bei Anforderung eines Zertifikats übermittelt, sondern unabhängig davon vom Positivpfadserver 21 über eine bevorzugt gesicherte Verbindung 37 an den Nutzer 30 übertragen.

Unabhängig von den in Figur 5 und 6 dargestellten Varianten kann die Zertifikatspfad-Positivliste CPL Randbedingungen für die Verwendung eines gültigen Zertifikatspfades umfassen.

Das Zertifikat 32 in dem in Figur 5 beschriebenen Szenarium umfasst, im Gegensatz zum Nutzerzertifikat 33 aus Figur 6, selbst keine Angaben zur Zertifikatspfad-Positivliste CPL. Es enthält lediglich die Signatur der Ausstellungsstelle 23, die in der Überprüfungsvorrichtung 31, anhand der dort vorliegenden Zertifikatspfad-Positivliste CPL überprüft wird. In dem in Figur 6 dargestellten Szenarium umfasst das Nutzerzertifikat 33 die Zertifikatspfad-Positivliste CPL. Die Überprüfungsvorrichtung 31 benötigt keine weitere Information bezüglich Zertifikaten der Zertifikatspfad-Liste und kann somit ein wenig komplexes Gerät beziehungsweise eine wenig komplexe Vorrichtung sein.

Beim Ausstellen eines Nutzerzertifikats 33 wird im Szenario gemäß Figur 6 Information zum Zertifikatspfad in die Zertifikatspfadliste CPL und somit in das Zertifikat eincodiert. Vorteilhafterweise wird diese Information als Zertifikatserweiterung eingebunden. Damit ist diese Information sowohl in einem digitalen Zertifikat beispielsweise gemäß dem ITU-T Standard X.509 als auch in einem Attribut-Zertifikat nutzbar.

Ein gültiger Zertifikatspfad kann dabei alle Zertifikate beginnend mit dem Zertifikat der ausstellenden Ausstellungsstelle 23 oder alle Zertifikate beginnend mit einem der ausstellenden Ausstellungsstelle übergeordneten Ausstellungsstelle bis einschließlich einem Wurzelzertifikat umfassen. Der Zertifikatspfad kann aber auch Kriterien umfassen, die bestimmen, welcher Zertifikatspfad zulässig ist. Ist in einem Zertifikatspfad nicht die das Nutzerzertifikat ausstellende Ausstellungsstelle, sondern der Zertifikatspfad beginnend mit einer nachfolgenden Ausstellungstelle beginnend angegeben, so können mehr oder weniger unterschiedliche Zertifikatspfade zur Überprüfung erlaubt werden. Dies ist ein neues Kriterium zur Validierung von Zertifikatspfaden.

Das Nutzerzertifikat 33 selbst gibt explizit an, welcher beziehungsweise welche Zertifikatspfade zulässig sind. Es wird somit die Zertifikatspfad-Positivliste CPL mit den gültigen Zertifikatspfaden in das Zertifikat selbst eincodiert. Die Zertifikatspfad-Positivliste CPL kann dabei für ein bestimmtes Nutzerzertifikat spezifisch sein. Bevorzugt ist eine Zertifikatspfad-Positivliste jedoch für eine Vielzahl von Nutzerzertifikaten, beispielsweise abhängig vom Typ des Nutzers 30 oder vom Aufenthalt des Nutzers 30 in einem bestimmten geographischen Bereich abhängig.

Ein Nutzerzertifikat 33 kann die Zertifikatspfad-Positivliste CPL umfassen, die zum Ausstellungszeitpunkt des Nutzerzertifikats 33 vorlag. Abhängig von einer lokalen Überprüfungsrichtlinie in der Überprüfungsvorrichtung 31 können bestimmte Abweichungen von dieser Zertifikatspfad-Positivliste zulässig sein.

Die Information zu einer Zertifikatspfad-Positivliste kann wie folgt in der Zertifikatserweiterung eines Public-Key Zertifikates oder in einem Attribut eines Attributzertifikates eingebunden werden. Der im Standard X.509 definierte ASN.1 Typ *PkiPath ::= SEQUENCE OF Certificate* kann genutzt werden, um die Zertifikatspfad-Liste direkt zu transportieren und einzubinden. Dabei kann die komplette Zertifikatsinformation eingebunden.

In einer Variante wird stattdessen eine komprimierte Zertifikatspfad-Liste übertragen. Dabei wird beispielsweise für jeden Zertifikatspfad ein Hashwert ermittelt. Diese werden in der Zertifikatspfad-Liste CPL als eine Aneinanderreihung von Hashwerten der Zertifikatspfade übertragen. In einer weiteren Variante wird für jedes einzelne Zertifikat eines Zertifikatspfades ein Hashwert ermittelt und ein Zertifikatpfad als Verknüpfung oder Aneinanderreihung von Hashwerten in der Zertifikatspfad-Positivliste CPL übermittelt. Es ist auch möglich, nur einen Teilpfad oder einzelne Zertifikate eines Zertifikatspfades verkürzt zu übertragen.

Weiterhin ist es möglich, ein Zertifikat oder einen Zertifikatspfad durch andere Informationen zu identifizieren, zum Beispiel durch Angabe des Ausstellers oder der Seriennummer des Zertifikats bzw. Zertifikatspfads. Dies erfordert jedoch eine entsprechend vorhandene Information in der Überprüfungsvorrichtung 31.

Auch die Zertifikatspfad-Positivliste CPL selbst kann durch einen Referenzwert auf die Zertifikatspfad-Positivliste übertragen. Diese werden über die ausstellende Ausstellungsstelle 23 beziehungsweise den Positivpfadserver 21 aufgelöst. Der Referenzwert wird beispielsweise an die ausstellende Ausstellungsstelle 23 beziehungsweise den Positivpfadserver 21 übermittelt und von dort wird die entsprechende Zertifikatspfad-Positivliste dem Nutzer 22 beziehungsweise der Überprüfungsvorrichtung 31 übermittelt.

Die Überprüfungsvorrichtung 31 überprüft für die Validierung eines empfangenen Nutzerzertifikats 33 den Zertifikatspfad basierend auf den in der Zertifikatpfads-Liste CPL enthaltenen Zertifikatspfaden und den dazu angegebenen Kriterien. Bei einer komprimierten Zertifikatspfad-Positivliste CPL kann die Überprüfungsvorrichtung 31 diese mit einem lokal konfigurierten Zertifikatspfad überprüfen. Ein Nutzer 30 kann prüfen, ob das von ihm verwendete Nutzerzertifikat 32, 33 eine Zertifikatspfad-Liste enthält. Ist dies der Fall kann bei Protokollen wie TLS oder dem IP-Sicherheitsprotokoll IPsec auf die heute übliche Übertragung des Zertifikatspfads im Rahmen des Protokolls unterbleiben.

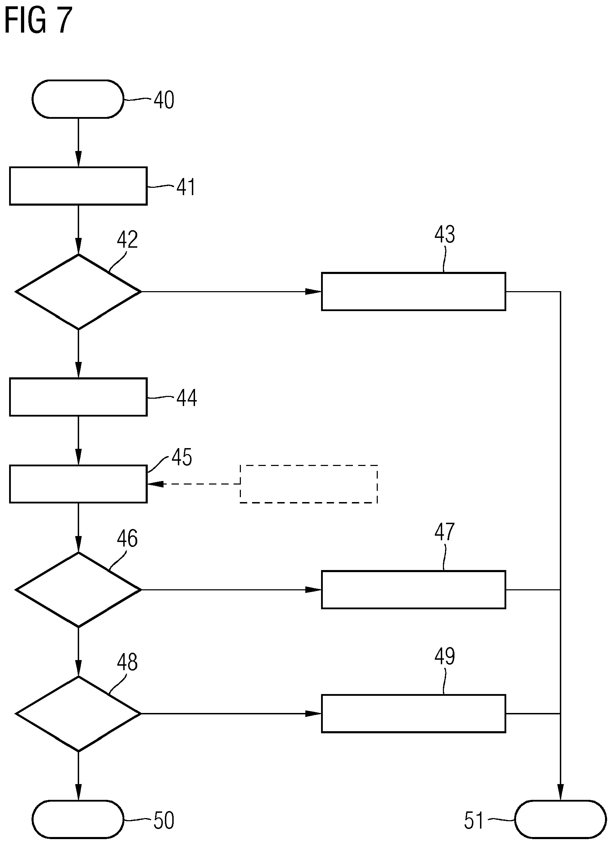

Die Überprüfung eines Nutzerzertifikates 33 eines Nutzers 30 durch eine Überprüfungseinheit 31 ist in Figur 7 dargestellt. Hierbei werden das Zertifikat 33 und die Zertifikatspfad-Positivliste CPL beziehungsweise ein darin enthaltener Zertifikatspfad 15 nicht im Kontext eines Transportprotokolls überprüft, sondern im Kontext einer Anwendung/Applikation. Der Nutzer 30 überträgt komprimierte Zertifikatspfade, beispielsweise einen Referenzwert in Form eines Fingerprints seines eigenen Zertifikatspfades als Teil des Nutzerzertifikats 33. In der Überprüfungseinheit 31 wird das Nutzerzertifikat 33, siehe Ausgangszustand 40 und an die Applikation weitergegeben, siehe Schritt 41. Die Applikation kann nun anhand des Zertifikats 33 mit integrierter Information über den Zertifikatspfad das Zertifikat validieren. Dazu wird in Verfahrensschritt 42 die Zertifikatssignatur überprüft. Wird dabei ein Fehler festgestellt, wird eine Fehlermeldung, siehe 43, ausgegeben. Ist die Überprüfung erfolgreich, wird ein komprimiert im Zertifikat enthaltener Zertifikatspfad ausgelesen, siehe 44 und mit einem aus einem Speicher ausgelesenen Zertifikatspfad, wie 45 in Schritt 46 verglichen. Ist der Vergleich beziehungsweise die Überprüfung erfolgreich, wird die Nachricht weiter bearbeitet, siehe 48. Bei einer fehlgeschlagenen Validierung wird eine Fehlermeldung 47 beziehungsweise 49 ausgegeben und der Vorgang beendet, siehe 51.

Eine Zertifikatspfad-Positivliste kann nicht nur in einem Nutzerzertifikat 1, 2, 3 sondern auch in einem Zertifikat 12.2, 13.1 der ausstellenden Ausstellungsstelle 23 oder einer weiteren Ausstellungsstelle in dem Zertifikatspfad 15, siehe Figur 2 verwendet werden. Grundsätzlich kann auch ein Wurzelzertifikat eine Zertifikatspfad-Positivliste umfassen.

Die Übertragung der Zertifikatspfad-Positivliste im Nutzerzertifikat ermöglicht es auf die explizite Übertragung dieser Information im Sicherheitsprotokoll zu verzichten. Damit steht diese Information der Überprüfungsvorrichtung 31 immer zur Verfügung, unabhängig von dem genutzten Protokoll. Durch die Unabhängigkeit vom eigentlichen Sicherheitsprotokoll, wie zum Beispiel TLS, IPsec, kann der beschriebene Ansatz einfach mit bestehenden Kommunikationsinfrastrukturen verwendet werden. Die Validierung eines digitalen Zertifikats wird vereinfacht, wenn das Zertifikat selbst die zur Validierung benötigten Informationen enthält. Die komprimierte Übertragung von Zertifikatspfad-Positivlisten beziehungsweise der darin enthaltenen Zertifikatspfade reduziert dabei die zu übertragende Datenmenge. Dies ist insbesondere bei batteriebetriebenen Internet of Things-Geräten oder bei schmalbandigen Funkübertragungssystemen vorteilhaft. Weiterhin kann diese zu einem schnelleren Verbindungsaufbau führen, da das Zertifikat schon alle Informationen beinhaltet.

Der beschriebene Ansatz lässt sich auf einer Nutzervorrichtung beziehungsweise einer Überprüfungsvorrichtung implementieren und ermöglicht damit eine effiziente Alternative zur herkömmlichen Zertifikatspfadvalidierung. Ebenso kann das Verfahren genutzt werden, um die Zertifikatspfad-Validierung durch einen dritten, vertrauenswürdigen Knoten durchführen zu lassen, zum Beispiel wenn die Überprüfungsvorrichtung nur eine begrenzte Kapazität hat. Hierzu ließe sich das bekannte Server-basierte Zertifikatsvalidierungsprotokoll SCVP (RFC 5055) in der Anforderungsnachricht entsprechend erweitern, um nicht nur die Übergabe eines zu überprüfenden Zertifikats zu ermöglichen, sondern auch die Möglichkeit nur den Zertifikatspfad der Zertifikationspfad-Positivliste überprüfen zu lassen. Die Validierung der Zertifikatspfade ist durch die Erfindung weniger fehleranfällig, auditierbar und ermöglicht eine gezielte Kontrolle über zulässige Zertifikatspfade. Dadurch ist sie insbesondere für kritische industrielle Automatisierungssysteme vorteilhaft.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Validierung eines digitalen Nutzerzertifikats (32, 33) eines Nutzers (30) durch eine Überprüfungsvorrichtung (31),
wobei das Nutzerzertifikat (32, 33) durch eine digitale Signatur mit einem Ausstellerschlüssel einer das Nutzerzertifikat ausstellenden Ausstellungsstelle (23) geschützt ist, und ein Zertifikatpfad eine Kette von jeweils die Signatur des vorhergehenden Zertifikats bestätigenden Zertifikaten ist, umfassend die Verfahrensschritte:
- Empfangen (S1) des Nutzerzertifikats in der Überprüfungsvorrichtung (31),
- Überprüfen (S2) des Nutzerzertifikats (32, 33) anhand einer Zertifikatspfad-Positivliste (CPL) mit mindestens einem gültigen Zertifikatspfad, die von mindestens einem Positivpfadserver (21) an die Überprüfungsvorrichtung (31) bereitgestellt wird, und
- Bestätigen (S3) der Gültigkeit des Nutzerzertifikats (32, 33), wenn der Ausstellerschlüssel des Nutzerzertifikats (32, 33) gemäß einem der gültigen Zertifikatspfade der Zertifikatspfad-Positivliste (CPL) auf ein Wurzelzertifikat zurückführbar ist.

2. Verfahren nach Anspruch 1, wobei
die Zertifikatspfad-Positivliste (CPL) mittels einer kryptographischen Funktion geschützt wird.

3. Verfahren nach einem der vorhergehenden Ansprüche, wobei die Zertifikatspfad-Positivliste (CPL) abhängig von vorgegebenen Kriterien aktualisiert wird und von dem mindestens einen Positivpfadserver (21) an die Überprüfungsvorrichtung (31) bereitgestellt wird.

4. Verfahren nach einem der vorhergehenden Ansprüche, wobei der mindestens eine Positivpfadserver (21) die Zertifikatspfad-Positivliste (CPL) mit gültigen Zertifikatspfaden für die von der Ausstellungsstelle (23) ausgestellten Zertifikate empfängt.

5. Verfahren nach einem der Ansprüche 1 bis 3, wobei der mindestens eine Positivpfadserver (21) die für Nutzerzertifikate des Nutzers (30) gültigen Zertifikatspfade anfordert und der Positivpfadserver (21) die Zertifikatspfad-Positivliste (CPL) umfassend die gültigen Zertifikatspfade erzeugt.

6. Verfahren nach einem der vorhergehenden Ansprüche, wobei ein gültiger Zertifikatspfad (15) alle Zertifikate (12.2, 13.1, 14) beginnend mit einem Zertifikat (12) der ausstellenden Ausstellungsstelle (21) oder alle Zertifikate (13.1, 14) beginnend mit einem der ausstellenden Ausstellungsstelle (21) übergeordneten Ausstellungsstelle bis einschließlich einem Wurzelzertifikat (14) umfasst.

7. Verfahren nach einem der vorhergehenden Ansprüche, wobei die Zertifikatspfad-Positivliste (CPL) Randbedingungen für die Verwendung eines gültigen Zertifikatspfades umfasst.

8. Verfahren nach einem der vorhergehenden Ansprüche, wobei die Zertifikatspfad-Positivliste durch einen Übermittlungsdienst oder eine Transaktion einer Blockkette einer verteilten Datenbank an die Überprüfungsvorrichtung (31) bereitgestellt wird.

9. Verfahren nach einem der vorhergehenden Ansprüche, wobei die Zertifikatspfad-Positivliste (CPL) beim Ausstellen des Nutzerzertifikats von der Ausstellungsstelle (23) in das Nutzerzertifikat (33) eingefügt wird.

10. Verfahren nach Anspruch 9, wobei die Zertifikatspfad-Positivliste (CPL) als Zertifikatserweiterung in das Nutzerzertifikat (33) eingebracht wird.

11. Verfahren nach Anspruch 9 oder 10, wobei ein Zertifikatspfad (15) in komprimierter Form in der Zertifikatspfad-Positivliste (CPL) eingebracht wird.

12. Verfahren nach einem der Ansprüche 9 bis 11, wobei eine Referenzinformation zur Zertifikatspfad-Positivliste (CPL) in das Nutzerzertifikat (33) eingebracht wird.

13. System zur Validierung eines digitalen Nutzerzertifikats eines Nutzers (30) durch eine Überprüfungsvorrichtung (31), wobei das Nutzerzertifikat (32, 33) durch eine digitale Signatur mit einem Ausstellerschlüssel einer das Nutzerzertifikat ausstellenden Ausstellungsstelle (23) geschützt ist, und ein Zertifikatpfad eine Kette von jeweils die Signatur des vorhergehenden Zertifikats bestätigenden Zertifikaten ist, umfassend jeweils mindestens einen Nutzer (30), eine Überprüfungsvorrichtung (31), einen Positivpfadserver (21) und eine Ausstellungsstelle (23), die derart ausgebildet sind das Verfahren gemäß den Ansprüchen 1 bis 12 auszuführen.

14. Überprüfungsvorrichtung (31) zur Validierung eines digitalen Nutzerzertifikats (32, 33) eines Nutzers (30), wobei das Nutzerzertifikat (32, 33) durch eine digitale Signatur mit einem Ausstellerschlüssel einer das Nutzerzertifikat ausstellenden Ausstellungsstelle (23) geschützt ist, und
ein Zertifikatpfad eine Kette von jeweils die Signatur des vorhergehenden Zertifikats bestätigenden Zertifikaten ist, die derart ausgebildet ist das Verfahren gemäß den Ansprüchen 1 bis 12 auszuführen.

15. Nutzervorrichtung (30) mit einem digitalen Nutzerzertifikat, wobei das Nutzerzertifikat durch eine digitale Signatur mit einem Ausstellerschlüssel einer das Nutzerzertifikat (32, 33) ausstellenden Ausstellungsstelle (23) geschützt ist, und ein Zertifikatpfad eine Kette von jeweils die Signatur des vorhergehenden Zertifikats bestätigenden Zertifikaten ist, die derart ausgebildet ist das Verfahren gemäß den Ansprüchen 1 bis 12 auszuführen.

16. Positivpfadserver (21) zur Validierung eines digitalen Nutzerzertifikats (32, 33) eines Nutzers (30), wobei das Nutzerzertifikat (32, 33) durch eine Signatur mit einem Ausstellerschlüssel einer das Nutzerzertifikat (32, 33) ausstellenden Ausstellungsstelle (23) geschützt ist, und
ein Zertifikatpfad eine Kette von jeweils die Signatur des vorhergehenden Zertifikats bestätigenden Zertifikaten ist, die derart ausgebildet ist das Verfahren gemäß den Ansprüchen 1 bis 12 auszuführen.

17. Computerprogrammprodukt das direkt in einen Speicher eines digitalen Computers ladbar ist, umfassend Programmcodeteile, die dazu geeignet sind, die Schritte des Verfahrens nach einem der Ansprüche 1 bis 12 durchzuführen.

## Claims

1. Method for validating a digital user certificate (32, 33) of a user (30) by means of a checking apparatus (31),
wherein the user certificate (32, 33) is protected by a digital signature using an issuer key of an issuing authority (23) issuing the user certificate, and
a certificate path is a chain of certificates each confirming the signature of the preceding certificate,
comprising the method steps of:
- receiving (S1) the user certificate in the checking apparatus (31),
- checking (S2) the user certificate (32, 33) on the basis of a certificate path positive list (CPL), containing at least one valid certificate path, that is provided to the checking apparatus (31) by at least one positive path server (21), and
- confirming (S3) the validity of the user certificate (32, 33) if the issuer key of the user certificate (32, 33) is traceable to a root certificate on the basis of one of the valid certificate paths on the certificate path positive list (CPL).

2. Method according to Claim 1, wherein
the certificate path positive list (CPL) is protected by means of a cryptographic function.

3. Method according to either of the preceding claims, wherein the certificate path positive list (CPL) is updated on the basis of predefined criteria and is provided to the checking apparatus (31) by the at least one positive path server (21).

4. Method according to one of the preceding claims, wherein the at least one positive path server (21) receives the certificate path positive list (CPL) containing valid certificate paths for the certificates issued by the issuing authority (23).

5. Method according to one of Claims 1 to 3, wherein the at least one positive path server (21) requests the certificate paths valid for user certificates of the user (30), and the positive path server (21) generates the certificate path positive list (CPL) comprising the valid certificate paths.

6. Method according to one of the preceding claims, wherein a valid certificate path (15) comprises all certificates (12.2, 13.1, 14) beginning with a certificate (12) from the issuing issuing authority (21) or all certificates (13.1, 14) beginning with one from an issuing authority that is superordinate to the issuing issuing authority (21), up to and including a root certificate (14).

7. Method according to one of the preceding claims, wherein the certificate path positive list (CPL) comprises constraints for the use of a valid certificate path.

8. Method according to one of the preceding claims, wherein the certificate path positive list is provided to the checking apparatus (31) by a transmission service or a transaction of a blockchain of a distributed database.

9. Method according to one of the preceding claims, wherein the certificate path positive list (CPL) is inserted into the user certificate (33) by the issuing authority (23) when the user certificate is issued.

10. Method according to Claim 9, wherein the certificate path positive list (CPL) is introduced into the user certificate (33) as a certificate extension.

11. Method according to Claim 9 or 10, wherein a certificate path (15) is introduced into the certificate path positive list (CPL) in compressed form.

12. Method according to one of Claims 9 to 11, wherein a piece of reference information about the certificate path positive list (CPL) is introduced into the user certificate (33).

13. System for validating a digital user certificate of a user (30) by means of a checking apparatus (31),
wherein the user certificate (32, 33) is protected by a digital signature using an issuer key of an issuing authority (23) issuing the user certificate, and
a certificate path is a chain of certificates each confirming the signature of the preceding certificate,
comprising in each case at least one user (30), a checking apparatus (31), a positive path server (21) and an issuing authority (23), which are designed to perform the method according to Claims 1 to 12.

14. Checking apparatus (31) for validating a digital user certificate (32, 33) of a user (30), wherein the user certificate (32, 33) is protected by a digital signature using an issuer key of an issuing authority (23) issuing the user certificate, and
a certificate path is a chain of certificates each confirming the signature of the preceding certificate,
which checking apparatus is designed to perform the method according to Claims 1 to 12.

15. User apparatus (30) having a digital user certificate, wherein the user certificate is protected by a digital signature using an issuer key of an issuing authority (23) issuing the user certificate (32, 33), and
a certificate path is a chain of certificates each confirming the signature of the preceding certificate,
which user apparatus is designed to perform the method according to Claims 1 to 12.

16. Positive path server (21) for validating a digital user certificate (32, 33) of a user (30), wherein the user certificate (32, 33) is protected by a signature using an issuer key of an issuing authority (23) issuing the user certificate (32, 33), and
a certificate path is a chain of certificates each confirming the signature of the preceding certificate,
which positive path server is designed to perform the method according to Claims 1 to 12.

17. Computer program product that can be loaded directly into a memory of a digital computer, comprising program code parts suitable for carrying out the steps of the method according to one of Claims 1 to 12.

## Revendications

1. Procédé destiné à la validation d'un certificat numérique d'utilisateur (32, 33) d'un utilisateur (30) par l'intermédiaire d'un dispositif de vérification (31) ;
dans lequel le certificat d'utilisateur (32, 33) est protégé par une signature numérique comprenant une clé d'émission d'un organisme émetteur (23) qui émet le certificat d'utilisateur, et un chemin de certification représente une chaîne de certificats confirmant respectivement la signature du certificat précédent, qui comprend les étapes suivantes, à savoir :
- la réception (S1) du certificat d'utilisateur dans le dispositif de vérification (31) ;
- la vérification (S2) du certificat d'utilisateur (32, 33) en se référant à une liste positive de chemins de certification (CPL) comprenant au moins un chemin de certification valide, qui est mise à la disposition du dispositif de vérification (31) à partir d'au moins un serveur de chemins positifs (21) ; et
- la confirmation (S3) de la validité du certificat d'utilisateur (32, 33) lorsque la clé d'émission du certificat d'utilisateur (32, 33), conformément à un des chemins valides de certification de la liste positive de chemins de certification (CPL), peut être renvoyée à un certificat racine.

2. Procédé selon la revendication 1, dans lequel la liste positive de chemins de certification (CPL) est protégée au moyen d'une fonction cryptographique.

3. Procédé selon l'une quelconque des revendications précédentes, dans lequel la liste positive de chemins de certification (CPL) est actualisée en fonction de critères qui ont été prédéfinis et est mise à la disposition du dispositif de vérification (31) à partir dudit au moins un serveur de chemins positifs (21).

4. Procédé selon l'une quelconque des revendications précédentes, dans lequel ledit au moins un serveur de chemins positifs (21) reçoit la liste positive de chemins de certification (CPL) qui comprend des chemins de certification valides pour les certificats émis à partir de l'organisme émetteur (23).

5. Procédé selon l'une quelconque des revendications 1 à 3, dans lequel ledit au moins un serveur de chemins positifs (21) sollicite les chemins de certification valides pour les certificats de l'utilisateur (30) et le serveur de chemins positifs (21) génère la liste positive de chemins de certification (CPL) qui comprend les chemins de certification valides.

6. Procédé selon l'une quelconque des revendications précédentes, dans lequel un chemin de certification valide (15) comprend tous les certificats (12.2, 13.1, 14) en commençant par un certificat (12) de l'organisme émetteur (23) ou tous les certificats (12.2, 13.1, 14) en commençant par un certificat de l'organisme émetteur qui prime sur l'organisme émetteur (23) jusqu'à, y compris, un certificat racine (14).

7. Procédé selon l'une quelconque des revendications précédentes, dans lequel la liste positive de chemins de certification (CPL) comprend des conditions aux limites pour l'utilisation d'un chemin de certification valide.

8. Procédé selon l'une quelconque des revendications précédentes, dans lequel la liste positive de chemins de certification est mise à la disposition du dispositif de vérification (31) par l'intermédiaire d'un service de transmission ou d'une opération d'une chaîne de blocs d'une banque de données diffusée.

9. Procédé selon l'une quelconque des revendications précédentes, dans lequel la liste positive de chemins de certification (CPL) est insérée, lors de l'émission du certificat d'utilisateur à partir de l'organisme émetteur (23), dans le certificat d'utilisateur (33).

10. Procédé selon la revendication 9, dans lequel la liste positive de chemins de certification (CPL) est incorporée, à titre d'extension de certificat, dans le certificat d'utilisateur (33).

11. Procédé selon la revendication 9 ou 10, dans lequel un chemin de certification (15) est incorporé sous une forme comprimée dans la liste positive de chemins de certification (CPL) .

12. Procédé selon l'une quelconque des revendications 9 à 11, dans lequel une information de référence est incorporée dans le certificat d'utilisateur (33) pour la liste positive de chemins de certification (CPL).

13. Système destiné à la validation d'un certificat numérique d'utilisateur d'un utilisateur (30) par l'intermédiaire d'un dispositif de vérification (31) ; dans lequel le certificat d'utilisateur (32, 33) est protégé par une signature numérique qui comprend une clé d'émission d'un organisme émetteur (23) qui émet le certificat d'utilisateur, et un chemin de certification représente une chaîne de certificats confirmant respectivement la signature du certificat précédent, qui comprend respectivement au moins un utilisateur (30), un dispositif de vérification (31), un serveur de chemins positifs (21) et un organisme émetteur (23), qui sont réalisés de manière à mettre en œuvre le procédé selon les revendications 1 à 12.

14. Dispositif de vérification (31) destiné à la validation d'un certificat numérique d'utilisateur (32, 33) d'un utilisateur (30) ; dans lequel le certificat d'utilisateur (32, 33) est protégé par une signature numérique qui comprend une clé d'émission d'un organisme émetteur (23) qui émet le certificat d'utilisateur, et un chemin de certification représente une chaîne de certificats confirmant respectivement la signature du certificat précédent, qui est réalisé de manière à mettre en œuvre le procédé selon les revendications 1 à 12.

15. Dispositif utilisateur (30) comprenant un certificat numérique d'utilisateur ; dans lequel le certificat d'utilisateur est protégé par une signature numérique qui comprend une clé d'émission d'un organisme émetteur (23) qui émet le certificat d'utilisateur, et un chemin de certification représente une chaîne de certificats confirmant respectivement la signature du certificat précédent, qui est réalisé de manière à mettre en œuvre le procédé selon les revendications 1 à 12.

16. Serveur de chemins positifs (21) destiné à la validation d'un certificat numérique utilisateur (32, 33) d'un utilisateur (30), dans lequel le certificat d'utilisateur (32, 33) est protégé par une signature qui comprend une clé d'émission d'un organisme émetteur (23) qui émet le certificat d'utilisateur, et un chemin de certification représente une chaîne de certificats confirmant respectivement la signature du certificat précédent, qui est réalisé de manière à mettre en œuvre le procédé selon les revendications 1 à 12.

17. Produit de programme informatique qui peut être chargé directement dans une mémoire d'un ordinateur numérique, comprenant des éléments de codes de programmes qui sont appropriés pour la mise en œuvre des étapes du procédé selon l'une quelconque des revendications 1 à 12.
